# FASCICULE DE BREVET EUROPEEN

(11) **EP 2 244 939 B1**
(45) Date de publication et mention de la délivrance du brevet: **20.03.2013**
(21) Numéro de dépôt: 08864153.5
(22) Date de dépôt: 16.12.2008
(51) Int. Cl.: B64C 1/40, B64D 33/02, B64D 15/04

(54) **STRUCTURE POUR LE TRAITEMENT ACOUSTIQUE PLUS PARTICULIEREMENT ADAPTEE A UNE ENTREE D'AIR D'UNE NACELLE D'AERONEF**
STRUKTUR ZUR AKUSTISCHEN BEHANDLUNG, INSBESONDERE FÜR DEN LUFTEINLASS EINER FLUGZEUGGONDEL
ACOUSTIC PROCESSING STRUCTURE PARTICULARLY ADAPTED TO THE AIR INLET OF AN AIRCRAFT NACELLE

(30) Priorité: 21.12.2007 FR 0760194
(43) Date de publication de la demande: 03.11.2010
(73) Titulaire: Airbus Opérations SAS, 31060 Toulouse (FR); Creuzet Aeronautique, 47200 Marmande (FR)
(72) Inventeur: PORTE, Alain, F-31770 Colomiers (FR); LALANE, Jacques, F-31650 Saint Orens De Gameville (FR); GANTIE, Fabrice, F-31000 Toulouse (FR); BARILLOT-CREUZET, Jacques, F-47200 Marmande (FR)
(74) Mandataire: Fantin, Laurent
(86) Numéro de dépôt international: PCT/FR2008/052312
(87) Numéro de publication internationale: WO 2009/081020

(56) Documents cités:
- EP-A- 1 232 944
- EP-A- 1 232 945
- EP-A- 1 398 473
- DE-B1- 2 314 396

## Description

La présente invention se rapporte à une structure pour le traitement acoustique plus particulièrement adaptée à une entrée d'air d'une nacelle d'aéronef.

Pour limiter l'impact des nuisances sonores à proximité des aéroports, les normes internationales sont de plus en plus contraignantes en matière d'émissions sonores.

Des techniques ont été développées pour réduire le bruit émis par un aéronef, et notamment le bruit émis par un ensemble propulsif, en disposant, au niveau des parois des conduits, des panneaux, revêtements ou structures visant à absorber une partie de l'énergie sonore, notamment en utilisant le principe des résonateurs d'Helmholtz. De manière connue, une structure pour le traitement acoustique comprend de l'extérieur vers l'intérieur une couche poreuse acoustiquement résistive, au moins une sous-structure alvéolaire et une couche réflectrice ou imperméable.

Par couche, on entend une ou plusieurs couches de même nature ou non.

La couche poreuse acoustiquement résistive est une structure poreuse ayant un rôle dissipatif, transformant partiellement l'énergie acoustique de l'onde sonore la traversant en chaleur. Elle comprend des zones dites ouvertes susceptibles de laisser passer les ondes acoustiques et d'autres dites fermées ou pleines ne laissant pas passer les ondes sonores mais destinées à assurer la résistance mécanique de ladite couche. Cette couche acoustiquement résistive se caractérise notamment par un taux de surface ouverte qui varie essentiellement en fonction du moteur, des composants constituant ladite couche.

La sous-structure alvéolaire est délimitée par une première surface imaginaire au niveau de laquelle est susceptible d'être rapportée directement ou indirectement la couche poreuse acoustiquement résistive et par une seconde surface imaginaire au niveau de laquelle est susceptible d'être rapportée directement ou indirectement la couche réflectrice et comprend une pluralité de conduits débouchant d'une part au niveau de la première surface, et d'autre part, au niveau de la seconde surface. Ces conduits sont obturés par d'une part la couche poreuse acoustiquement résistive, et d'autre part, la couche réflectrice de manière à former une cellule.

Un nid d'abeilles est utilisée pour former la sous-structure alvéolaire. Différents types de matériaux peuvent être utilisés pour former le nid d'abeilles.

Selon un mode de réalisation, un nid d'abeilles est obtenu à partir de bandes disposées dans un plan vertical s'étendant selon une première direction, chaque bande étant reliée de manière alternée aux bandes adjacentes avec un espacement entre chaque zone de liaison. Ainsi, lorsque l'ensemble des bandes assemblées est expansé selon une direction perpendiculaire à la première direction, on obtient un panneau alvéolaire, les bandes formant les parois latérales des conduits de section hexagonale. Cet agencement permet d'obtenir de grandes résistances mécaniques à la compression et à la flexion.

Dans le cas d'une structure pour le traitement acoustique, le complexe est réalisé à plat, à savoir les couches poreuse acoustiquement résistive et réflectrice sont reliées à la sous-structure alvéolaire dans une configuration plane.

Par la suite, le complexe est mis en forme au niveau de la surface à traiter. Dans le cas d'une paroi plane ou d'une paroi cylindrique d'une nacelle de diamètre important, cette mise en forme peut être réalisée. Il en est autrement pour les conduits de faibles diamètres ou les surfaces complexes non développables, par exemple avec deux rayons de courbure comme une entrée d'air d'une nacelle.

Ces difficultés de mise en forme découlent en premier lieu de la nature même du panneau alvéolaire qui a une forte résistance à la flexion. Ainsi, lorsque le panneau alvéolaire est courbée selon un premier rayon de courbure orienté vers le haut et disposé dans un premier plan, cela tend à provoquer un rayon de courbure orienté vers le bas et disposé dans un plan sensiblement perpendiculaire au premier, le panneau alvéolaire prenant la forme d'une selle de cheval ou d'un paraboloïde hyperbolique.

Ces difficultés de mise en forme découlent également de la nature de la liaison entre la sous-structure alvéolaire et les couches qui n'est pas élastique. Ainsi, le nid d'abeilles étant fabriqué à plat sous contrainte, sa mise en forme le fragilise. Dans tous les cas, la mise en forme du complexe utilisé en tant que structure pour le traitement acoustique nécessite des outillages complexes et onéreux et demande un temps conséquent de cycles.

Selon une autre problématique, même si on parvenait à courber le complexe, la solution existante ne serait pas satisfaisante car la mise en forme entraîne des déformations aléatoires des parois latérales des conduits de la sous-structure alvéolaire si bien qu'il est délicat de déterminer le positionnement desdites parois latérales des conduits, ces dernières étant cachées par les couches réflectrice et acoustiquement résistive.

Compte tenu des difficultés pour la mise en forme du complexe, l'étendue des surfaces traitées de manière acoustique est limitée à l'intérieur des conduits de la nacelle, lesdites surfaces traitées ne se prolongeant pas au niveau de la lèvre de l'entrée d'air d'une nacelle.

Selon une autre contrainte importante, la sous-structure alvéolaire doit être relativement étanche entre deux points espacés selon la direction longitudinale afin de ne pas créer un débit d'air entre ces deux points à l'intérieur de la structure pour le traitement acoustique susceptible de générer un flux perturbé au niveau de la surface aérodynamique.

Le document EP-1.232.945 décrit une entrée d'air avec au niveau de la lèvre une structure pour assurer le traitement acoustique qui comprend, de l'extérieur vers l'intérieur, une paroi acoustiquement résistive, des bandes sous forme de nid d'abeilles espacées les unes des autres et une ou plusieurs plaques formant une paroi réflectrice, Chaque bande comprend des parois sensiblement perpendiculaires à la paroi acoustiquement poreuse et à la paroi réflectrice qui délimitent des cellules. Ces parois latérales sont soudées à la paroi réflectrice à une première extrémité et à la paroi acoustiquement poreuse à l'autre extrémité. Ce mode d'assemblage ne permet pas de garantir une étanchéité entre les bandes espacées selon la direction longitudinale de la nacelle.

Aussi, la présente invention vise à pallier aux inconvénients de l'art antérieur en proposant une structure pour le traitement acoustique susceptible de s'adapter à une surface complexe, telle qu'une entrée d'air d'une nacelle d'aéronef, relativement étanche entre deux points espacés selon la direction longitudinale de ladite nacelle.

A cet effet, l'invention a pour objet une structure pour le traitement acoustique rapportée au niveau d'un bord d'attaque sur lequel s'écoule un flux aérodynamique, notamment au niveau d'une entrée d'air d'une racelle d'aéronef, ladite structure pour le traitement acoustique comprenant de l'extérieur vers l'intérieur, au moins une sous-structure acoustiquement résistive, au moins une sous-structure alvéolaire comportant des bandes de cellules, disposées selon une direction sensiblement perpendiculaire à la direction d'écoulement du flux aérodynamique, et au moins une couche réflectrice, caractérisée en ce que chaque bande comprend une première partie isolant les bandes entre elles, appelée support, avec une section en U selon dans la direction longitudinale de manière à former un caisson étanche, dont la face ouverte opposée au fond de la forme en U est plaquée contre la sous-structure acoustiquement résistive, et au moins une deuxième partie, appelée cloisonnement, permettant de cloisonner l'espace délimité par le support et la sous-structure acoustiquement résistive en cellules.

D'autres caractéristiques et avantages ressortiront de la description qui va suivre de l'invention, description donnée à titre d'exemple uniquement, en regard des dessins annexés sur lesquels :
- la figure 1 est une vue en perspective d'une nacelle d'aéronef,
- la figure 2 est une coupe selon un plan longitudinal de l'avant d'une nacelle,
- la figure 3A est une coupe de l'avant d'une nacelle selon une première variante de l'invention
- la figure 3B est une coupe de l'avant d'une nacelle selon une autre variante de l'invention,
- la figure 4 est une vue en perspective d'une portion d'une structure pour le traitement acoustique selon une première variante de l'invention,
- la figure 5 est une vue en perspective d'une portion d'une structure pour le traitement acoustique selon une autre variante de l'invention,
- la figure 6 est une vue en perspective d'une portion d'une structure pour le traitement acoustique selon une autre variante de l'invention,
- la figure 7 est une vue en perspective de la structure pour le traitement acoustique de la figure 6 illustrant la sous-structure acoustiquement résistive,
- la figure 8 est une vue en perspective d'une autre configuration d'une partie d'une structure pour le traitement acoustique selon l'invention,
- la figure 9 est une vue en coupe illustrant différentes configurations du traitement du givre,
- la figure 10 est une vue en perspective d'une première partie de la sous-structure alvéolaire,
- la figure 11 est une vue en perspective d'une seconde partie de la sous-structure alvéolaire,
- la figure 12 est une vue en perspective illustrant une bande de la sous-structure alvéolaire obtenue après l'assemblage des parties visibles sur les figures 10 et 11,
- la figure 13 est une vue en perspective illustrant une autre variante d'une bande de la sous-structure alvéolaire,
- la figure 14 est une vue en perspective illustrant une autre variante d'une bande de la sous-structure alvéolaire,
- la figure 15 est une vue en perspective de rangées de cellules de la sous-structure alvéolaire en cours de réalisation, et
- la figure 16 est une vue en perspective d'une partie de la sous-structure alvéolaire selon un autre mode de réalisation.

La présente invention est maintenant décrite appliquée à une entrée d'air d'un ensemble propulsif d'un aéronef. Cependant, elle peut s'appliquer aux différents bords d'attaque d'un aéronef ou aux différentes surfaces d'un aéronef au niveau desquels un traitement acoustique est opéré.

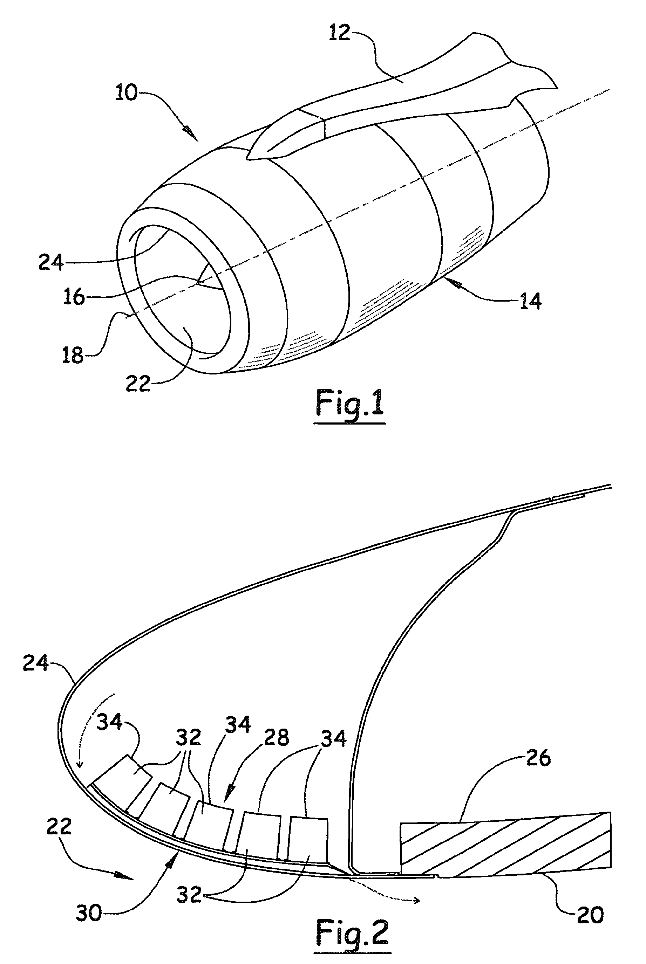

Sur la figure 1, on a représenté un ensemble propulsif 10 d'un aéronef relié sous la voilure par l'intermédiaire d'un mât 12. Toutefois, cet ensemble propulsif pourrait être relié à d'autres zones de l'aéronef.

Cet ensemble propulsif comprend une nacelle 14 dans laquelle est disposée de manière sensiblement concentrique une motorisation entraînant une soufflante montée sur son arbre 16. La direction longitudinale correspond à celle de l'axe de la nacelle référencé 18.

La nacelle 14 comprend une paroi intérieure 20 délimitant un conduit avec une entrée d'air 22 à l'avant, une première partie du flux d'air entrant, appelée flux primaire, traversant la motorisation pour participer à la combustion, la seconde partie du flux d'air, appelée flux secondaire, étant entrainée par la soufflante et s'écoulant dans un conduit annulaire délimité par la paroi intérieure 20 de la nacelle et la paroi extérieure de la motorisation.

La partie frontale 24 de l'entrée d'air 22 décrit une forme sensiblement circulaire qui s'étend dans un plan qui peut être sensiblement perpendiculaire à l'axe longitudinal 18, ou non perpendiculaire, avec la partie frontale située à 12h légèrement avancée. Toutefois, d'autres formes d'entrée d'air peuvent être envisagées.

Selon les dimensions de la nacelle, l'entrée d'air peut comprendre un premier rayon de courbure faible correspondant sensiblement au rayon du conduit 20 dans un plan perpendiculaire à la direction longitudinale ainsi qu'un second rayon de courbure faible dans un plan longitudinal, notamment entre le conduit 20 et le bord d'attaque de l'entrée d'air 22 de la nacelle.

Pour la suite de la description, on entend par surface aérodynamique l'enveloppe de l'aéronef en contact avec le flux aérodynamique.

Pour limiter l'impact des nuisances, une structure pour le traitement acoustique 26 visant à absorber une partie de l'énergie sonore, notamment en utilisant le principe des résonateurs d'Helmholtz est prévue notamment au niveau des surfaces aérodynamiques de la paroi intérieure 20. De manière connue, cette structure pour le traitement acoustique, également appelée panneau acoustique, comprend de l'intérieur vers l'extérieur une couche réflectrice, une sous-structure alvéolaire et une sous-structure acoustiquement résistive.

En variante, la structure pour le traitement acoustique peut comprendre plusieurs sous-structures alvéolaires séparées par des sous-structures acoustiquement résistives appelées septum.

Une structure pour le traitement acoustique 28 est prévue au niveau de l'entrée d'air 22.

Selon l'invention, la structure pour le traitement acoustique 28 comprend, de l'extérieur vers l'intérieur, une sous-structure acoustiquement résistive 30, des bandes 32 de cellules alvéolaires, disposées les unes à côté des autres selon une direction sensiblement perpendiculaire au plan contenant un rayon de courbure faible, à savoir un plan longitudinal dans le cas d'une entrée d'air 22 ainsi qu'au moins une couche réflectrice 34.

Dans le cas d'une entrée d'air d'une nacelle, les bandes 32 sont isolées entre elles de manière à ne pas permettre un écoulement d'air entre deux points espacés selon la direction longitudinale prévus dans deux bandes différentes. Par conséquent, cet agencement permet de limiter les risques de perturbations du flux d'air entrant dans le conduit 20 en raison de l'aspiration de l'air à l'intérieur de la structure pour le traitement acoustique en raison d'une dépression en un premier point et son refoulement à l'extérieur de ladite structure en un second point.

Afin de simplifier la fabrication, les bandes 32 ont une section rectangulaire ou carrée selon un plan longitudinal. Les bandes 32 sont dissociées pour pouvoir s'adapter au profil courbe de la sous-structure acoustiquement résistive 30, l'espacement entre deux bandes tendant à se réduire en fonction de l'éloignement avec la sous-structure acoustiquement résistive.

Ainsi, la structure pour le traitement acoustique selon l'invention peut s'adapter au surface comprenant un faible rayon de courbure comme une entrée d'air d'une nacelle.

Les bandes 32 sont disposées selon une direction sensiblement perpendiculaire au plan longitudinal pour obtenir un équilibre de pression d'air à l'intérieur des cellules d'une même bande afin de limiter la circulation de l'air d'une cellule à l'autre.

Selon un autre avantage, cette configuration permet un amortissement progressif d'un choc, notamment un choc d'oiseau, grâce à la faculté des bandes 32 de pouvoir s'articuler les unes par rapport aux autres.

Enfin, cette configuration permet de pouvoir associer un traitement acoustique à un traitement du givre, l'espacement entre les bandes permettant de placer des canaux au niveau de la couche acoustiquement résistive, entre les bandes 32, pour canaliser de l'air chaud utilisé pour le traitement du givre au niveau de la surface extérieure de l'entrée d'air.

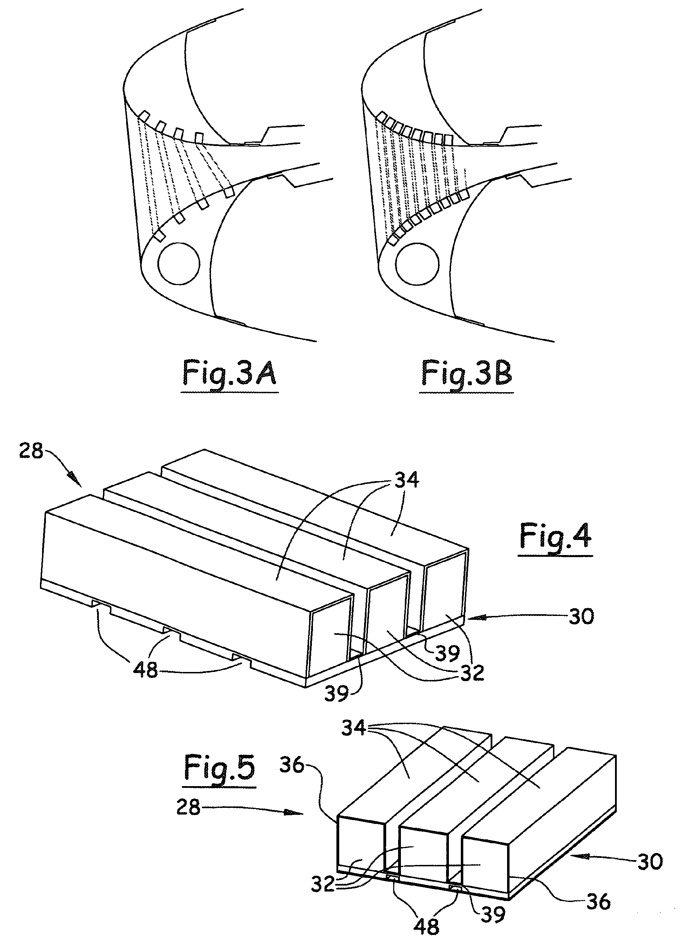

Comme illustré sur les figures 3A et 3B, l'entrée d'air d'une nacelle n'a pas une forme axisymétrique, la zone traitée au niveau de la partie basse ayant une longueur (selon la direction longitudinale) plus importante que celle de la partie haute. Ainsi, selon la figure 3A, les bandes 32 peuvent avoir une section régulière sur toute la circonférence mais ne pas être parallèles entre elles et avoir un espacement entre elles qui varie sur la circonférence, l'espacement entre deux bandes consécutives étant plus important en partie basse qu'en partie haute. En variante, les bandes 32 peuvent avoir une section évolutive sur la circonférence mais un espacement régulier sur la circonférence. Ainsi, la section des bandes est plus importante en partie basse qu'en partie haute.

Comme illustré sur la figure 3B, les bandes peuvent être parallèles, avoir une section régulière et un espacement régulier. Dans ce cas, au moins une bande ne s'étend pas sur toute la circonférence mais seulement sur la moitié inférieure de la circonférence.

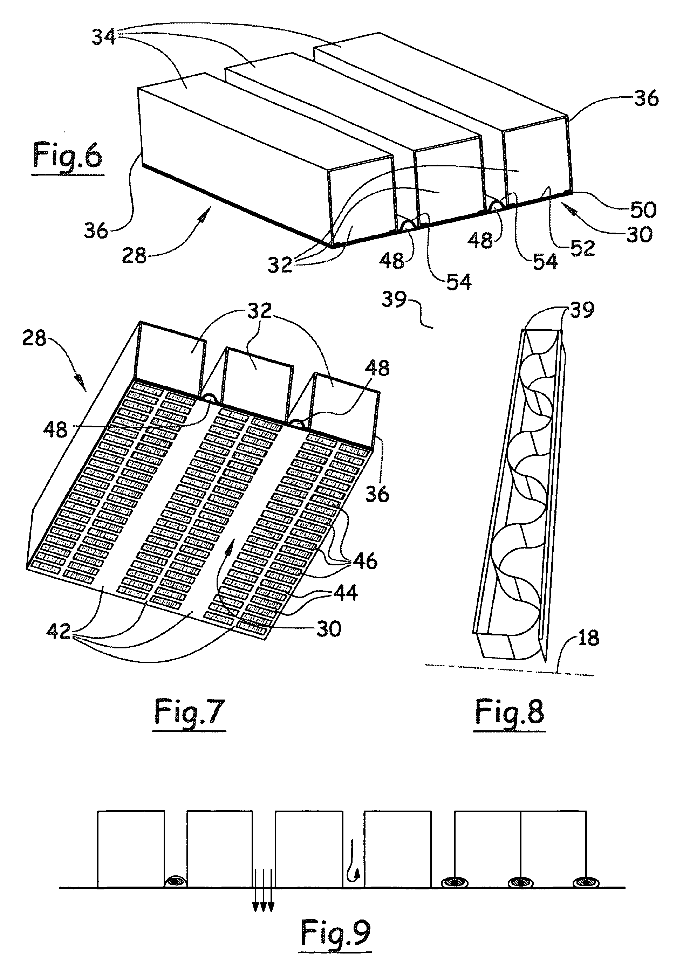

Selon les variantes, les bandes 32 peuvent avoir des parois latérales parallèles ou non comme illustré sur la figure 8.

Avantageusement, chaque bande 32 comprend une couche réf lectrice, les couches réflectrices étant indépendantes les unes des autres. Cette configuration permet une meilleure adaptation des bandes 32 au profil courbe.

Chaque bande 32 comprend une première partie 36, appelée support, avec une section en U selon dans la direction longitudinale, dont la face ouverte opposée au fond de la forme en U est plaquée contre la sous-structure acoustiquement résistive 30, et au moins une deuxième partie 38, appelée cloisonnement, permettant de cloisonner l'espace délimité par le support 36 et la sous-structure acoustiquement résistive 30 en cellules.

La forme en U permet d'obtenir des caissons étanches entre eux limitant la propagation d'un flux d'air à l'intérieur de la structure pour le traitement acoustique selon la direction longitudinale.

Selon les variantes, l'écartement des parois latérales du U peut être constant sur toute la circonférence ou varier comme illustré sur la figure 8.

Selon les variantes, le support 36 peut être métallique ou en matériau composite. Selon l'invention, le support 36 constitue une surface réflectrice assurant la fonction de la couche réflectrice 34.

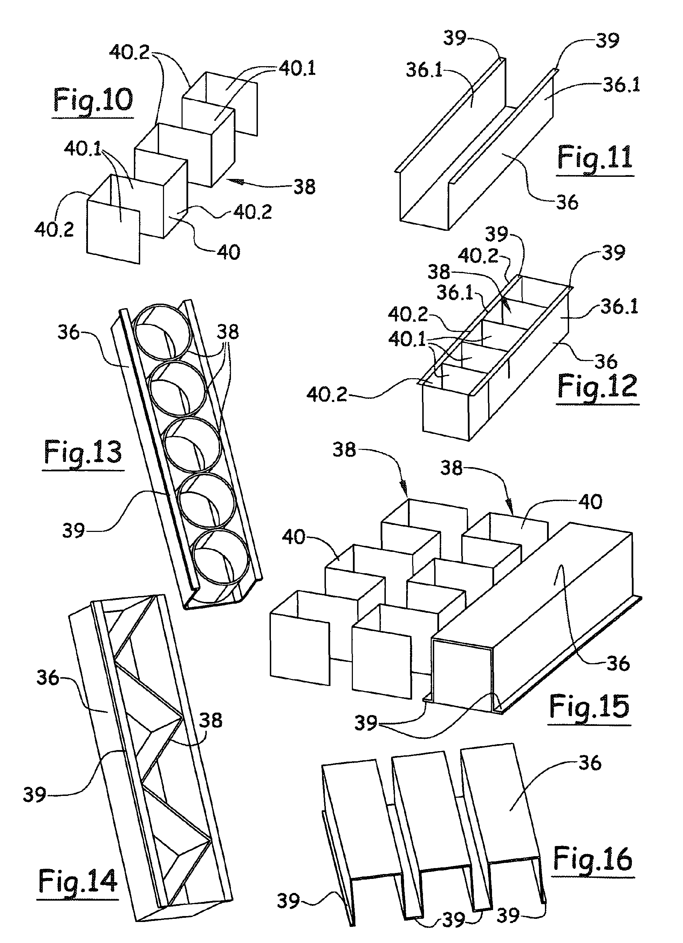

Selon les cas, les supports 36 des différentes bandes 32 sont indépendants les uns des autres ,comme illustré sur les figures 5, 6, 7, 15 ou reliés au niveau de la sous-structure acoustiquement résistive, comme illustré sur les figures 4 et 16. Dans ce cas, la structure pour le traitement acoustique comprend un support en forme de créneaux, comme illustré sur la figure 16, les bandes 32 étant alors reliées les unes aux autres au niveau de la sous-structure acoustiquement résistive mais pouvant toutefois s'articuler les unes par rapport aux autres en raison de la déformation possible du support unique au niveau des arêtes du support en contact avec la sous-structure acoustiquement résistive.

Dans tous les cas, les deux branches de la forme en U du support 36 comprennent au niveau de leurs extrémités distales de la base un rebord 39 offrant une surface d'appui susceptible d'être plaquée contre la sous structure acoustiquement résistive afin de rendre plus étanche la zone située à l'intérieur du support en U. Cet agencement permet de limiter le risque d'un écoulement d'air à l'intérieur de la structure pour le traitement acoustique entre deux points de deux bandes 32 différentes.

Selon les variantes, les rebords 39 entre deux supports consécutifs sont distincts ou sont reliés comme illustré sur la figure 16.

Selon les variantes, les rebords 39 peuvent être orientés vers l'extérieur du support en U ou vers l'intérieur du support en U.

Selon une variante illustrée sur la figure 13, le cloisonnement 38 peut comprendre plusieurs parois indépendantes les unes des autres, par exemple sous forme de cylindres disposés les uns à la suite des autres, ou sous forme de plaques s'étendant dans un plan longitudinal afin de délimiter avec les parois latérales du support des cellules acoustiques.

Selon un mode de réalisation préféré et illustré sur les figures 8, 10, 11, 12, 14 et 15, le cloisonnement 38 comprend au moins une plaque 40 ondulée comme illustré sur la figure 8, en forme de créneaux comme illustré sur la figure 10 ou en dent de scie comme illustré sur la figure 14, ladite plaque étant disposée perpendiculairement au fond du U du support 36 et reliant alternativement les deux branches du U, comme illustré sur les figures 8, 12 et 14.

Cet agencement permet d'obtenir des parois de séparation des cellules de manière simple qui se maintiennent perpendiculairement au fond grâce à leurs formes sans avoir recours à des moyens de fixation tels que des points de soudure.

Ainsi, selon la variante illustrée sur les figure 10, 12, 15, des premières parois 40.1 de la plaque 40 sont disposées perpendiculairement aux parois latérales 36.1 du support en U et des secondes parois 40.2 de la plaque sont disposées parallèlement aux parois latérales 36.1 et plaquées alternativement contre l'une ou l'autre des parois latérales 36.1 du support en U lorsque le cloisonnement 38 est placé dans le support 36. Ainsi, l'espacement entre deux parois 40.1 correspond à une cellule 39.

Pour immobiliser le cloisonnement 38 dans le support 36, des points de soudure peuvent être prévus.

Selon cette configuration, les cellules de chaque bande 32 sont parfaitement étanches vis-à-vis de l'extérieur. Même si les cellules d'une même bande ne sont pas parfaitement étanches entre elles, ce n'est pas pénalisant sur le plan acoustique et peut permettre éventuellement de drainer l'eau accumulé dans les cellules si nécessaire.

En fonction du système de traitement du givre (dégivrage ou anti-givrage), les bandes 32 peuvent être rapportées sur la sous-structure acoustiquement résistive 30 les unes à côté des autres ou avantageusement avec un espacement entre elles de sorte à pouvoir disposer des conduits pour canaliser l'air chaud dans le cas d'un système de dégivrage pneumatique.

Selon l'invention, la sous-structure acoustiquement résistive 30 comprend des zones pleines et des zones avec des orifices ou des microperfrations laissant passer les ondes sonores.

De préférence, les zones pleines non perforées se présentent sous la forme de bandes, une première série de bandes 42 selon une première direction et une seconde série de bandes 44 selon une seconde direction perpendiculaire à la première direction, comme illustré sur la figure 7.

Selon un mode de réalisation, la sous-structure acoustiquement résistive 30 peut comprendre plusieurs couches, au moins une couche résistive comprenant des microperforations, par exemple un wiremesh, et au moins une couche structurale comprenant des ouvertures 46 délimitées par les bandes 42 et 44, les ouvertures 46 permettant de découvrir les microperforations de la couche résistive comme illustré sur la figure 7.

Les bandes 32 sont rapportées sur la sous-structure acoustiquement résistive 30 de manière à faire coïncider la face ouverte opposée au fond du support 36 avec les ouvertures 46 de la couche structurale. Certaines bandes 42 de la couche structurale sont plus larges et sont disposées au droit des zones d'espacement prévues entre les bandes 32.

De préférence, la sous-structure acoustiquement résistive peut ou non être préformée selon la forme de la surface au niveau de laquelle la structure pour le traitement acoustique doit être prévue avant que les bandes 32 soient rapportées.

Selon l'invention, il est possible de courber la structure pour le traitement acoustique selon un rayon de courbure faible grâce à la sous-structure alvéolaire en forme de bandes 32 qui autorise une certaine souplesse.

La structure pour le traitement acoustique selon l'invention permet également de faire coexister un traitement acoustique et un traitement du givre.

Ainsi des canaux 48 peuvent être prévus au niveau de la sous-structure acoustiquement résistive 30. Ces canaux 48 peuvent s'étendre dans la même direction que les bandes 32, comme illustré sur la figure 5, 6 et 7, ou dans une direction perpendiculaire auxdites bandes 32, comme illustré sur la figure 4. Selon les variantes illustrées sur la figure 9, les canaux 48 peuvent être disposés au droit des zones d'espacement prévues entre les bandes 32 ou être disposés au niveau des parois latérales 36 des bandes.

Selon un mode de réalisation illustré sur les figures 6 et 7, la sous-structure acoustiquement résistive 30 comprend au moins deux couches, une première couche 50 plane ou ayant un profil adapté à la surface au niveau de laquelle est prévu la structure pour le traitement acoustique et une seconde couche 52 intercalée entre la première couche 50 et les bandes 32, comprenant des sillons 54 formant les canaux 48 lorsque les deux couches 50 et 52 sont plaquées l'une contre l'autre.

Comme illustré sur la figure 9, le traitement du givre peut être obtenu par une circulation d'air chaud entre les bandes qui traverse ou non la structure acoustiquement résistive 30.

Bien que décrit pour une entrée d'air, la structure pour le traitement acoustique selon l'invention n'est pas limitée à cette application. Ainsi, cette structure pourrait être appliquée à d'autres surfaces de l'aéronef, par exemple les bord d'attaque des ailes.

La structure pour le traitement acoustique selon l'invention est plus particulièrement adaptée à une surface comportant au moins un rayon de courbure faible.

## Revendications

1. Structure pour le traitement acoustique rapportée au niveau d'un bord d'attaque sur lequel s'écoule un flux aérodynamique, notamment au niveau d'une entrée d'air d'une nacelle d'aéronef, ladite structure pour le traitement acoustique comprenant de l'extérieur vers l'intérieur, au moins une sous-structure acoustiquement résistive (30), au moins une sous-structure alvéolaire comportant des bandes (32) de cellules, disposées selon une direction sensiblement perpendiculaire à la direction d'écoulement du flux aérodynamique, et au moins une couche réflectrice (34), **caractérisée en ce que** chaque bande (32) comprend une première partie (36) isolant les bandes entre elles, appelée support, avec une section en U selon dans la direction longitudinale de **manière à former un caisson étanche,** dont la face ouverte opposée au fond de la forme en U est plaquée contre la sous-structure acoustiquement résistive (30), et au moins une deuxième partie (38), appelée cloisonnement, permettant de cloisonner l'espace délimité par le support (36) et la sous-structure acoustiquement résistive (30) en cellules.

2. Structure pour le traitement acoustique selon la revendication 1, **caractérisée en ce que** les deux branches de la forme en U du support (36) comprennent au niveau de leurs extrémités distales de la base un rebord (39) offrant une surface d'appui susceptible d'être plaquée contre la sous structure acoustiquement résistive (30).

3. Structure pour le traitement acoustique selon la revendication 1 ou 2, **caractérisée en ce que** les supports (36) des bandes sont reliés au niveau de la sous-structure acoustiquement résistive (30).

4. Structure pour le traitement acoustique selon l'une quelconque des revendications 1 à 3, **caractérisée en ce que** le cloisonnement (38) comprend une plaque (40) dont les formes permettent de relier alternativement les parois latérales du support (36) en U, disposées perpendiculairement au fond du support (36).

5. Structure pour le traitement acoustique selon l'une quelconque des revendications 1 à 4, **caractérisée en ce que** la sous-structure acoustiquement résistive (30) comprend plusieurs couches, au moins une couche résistive comprenant des microperforations et ou moins une couche structurale comprenant des zones pleines pour la reprise des efforts délimitant des ouvertures (46) dégageant les microperforations de la couche résistive et **en ce que** les bandes (32) sont rapportées sur la sous-structure acoustiquement résistive (30) de manière à faire cöincider l'espacement entre les bandes (32) avec une zone pleine.

6. Structure pour le traitement acoustique selon l'une quelconque des revendications 1 à 5, **caractérisée en ce que** la sous-structure acoustiquement résistive (30) comprend des canaux (48) destinés à de l'air chaud d'un système de dégivrage.

7. Nacelle d'aéronef comprenant une entrée d'air comportant au niveau d'au moins une partie de sa surface une structure pour le traitement acoustique selon l'une quelconque des revendications 1 à 6.

## Claims

1. Acoustic treatment structure that is related to a leading edge onto which an aerodynamic stream flows, in particular at an air intake of an aircraft nacelle, whereby said acoustic treatment structure comprises - from the outside to the inside - at least one acoustically resistive substructure (30), at least one alveolar substructure comprising strips (32) of cells, arranged in a direction that is essentially perpendicular to the direction of flow of the aerodynamic stream, and at least one reflective layer (34), **characterized in that** each strip (32) comprises a first part (36) that insulates the strips from one another, called a support, with a U-shaped cross-section in the longitudinal direction so as to obtain an airtight box, whose open surface that is opposite to the bottom of the U shape is flattened against the acoustically resistive substructure (30), and at least a second part (38), called partitioning, making it possible to partition the space that is delimited by the support (36) and the acoustically resistive substructure (30) into cells.

2. Acoustic treatment structure according to claim 1, wherein the two U-shaped branches of the support (36) comprise - at their distal ends of the base - a flange (39) that offers a support surface that can be flattened against the acoustically resistive substructure (30).

3. Acoustic treatment structure according to claim 1 or 2, wherein the supports (36) of the strips are connected to the acoustically resistive substructure (30).

4. Acoustic treatment structure according to any of claims 1 to 3, wherein the partitioning (38) comprises a plate (40) whose shapes make it possible to alternately connect the side walls of the support (36) in a U, arranged perpendicularly to the bottom of the support (36).

5. Acoustic treatment structure according to any of claims 1 to 4, wherein the acoustically resistive substructure (30) comprises several layers, at least one resistive layer that comprises microperforations and at least one structural layer that comprises filled zones for taking up stresses delimiting openings (46) that release microperforations of the resistive layer, and wherein the strips (32) are attached to the acoustically resistive substructure (30) so as to make the spacing between the strips (32) coincide with a filled zone.

6. Acoustic treatment structure according to any of claims 1 to 5, wherein the acoustically resistive substructure (30) comprises channels (48) that are designed for the hot air of a defrosting system.

7. Aircraft nacelle comprising an air intake that comprises - at at least one part of its surface - an acoustic treatment structure according to any of claims 1 to 6.

## Patentansprüche

1. Struktur für die Schallbehandlung bezüglich eines Bereichs einer Anströmkante, die von einer aerodynamischen Strömung angeströmt ist, insbesondere im Bereich eines Lufteinlasses einer Flugzeuggondel, wobei die Struktur für die Schallbehandlung von außen nach innen wenigstens eine schalldämmende Unterstruktur (30), wenigstens eine kammerförmige Unterstruktur, die bezüglich der Strömungsrichtung der aerodynamischen Strömung im wesentlichen im rechten Winkel ausgerichtete Bänder (32) von Zellen umfasst, und wenigstens eine reflektierende Schicht (34) aufweist, **dadurch gekennzeichnet, dass** jedes Band (32) ein erstes die Bänder untereinander isolierendes Teil (36), Halterung genannt, aufweist, mit einem in Längsrichtung U-förmigen Querschnitt, um einen dichten Behälter zu bilden, dessen dem Boden der U-Form gegenüberliegende offene Seite an der schalldämmenden Unterstruktur (30) anliegt, und wenigstens ein zweites Teil (38), Abschirmung genannt, das es gestattet, den von der Halterung (36) und der schalldämmenden Unterstruktur (30) begrenzten Raum in Zellen zu unterteilen.

2. Struktur für die Schallbehandlung nach Anspruch 1, **dadurch gekennzeichnet, dass** die beiden Schenkel der U-Form der Halterung (36) im Bereich des von der Basis entfernten Endes einen Rand (39) aufweisen, der eine Stützfläche bildet, die dazu geeignet ist, an der schalldämmenden Unterstruktur (30) anzuliegen.

3. Struktur für die Schallbehandlung nach Anspruch 1 oder 2, **dadurch gekennzeichnet, dass** die Halterungen (36) der Bänder im Bereich der schalldämmenden Unterstruktur (30) untereinander verbunden sind.

4. Struktur für die Schallbehandlung nach einem der Ansprüche 1 bis 3, **dadurch gekennzeichnet, dass** die Abschirmung (38) eine Platte (40) aufweist, deren Ausgestaltung es gestatten, abwechselnd mit den Seitenwänden der U-förmigen Halterung (36) in Verbindung zu treten, die bezüglich des Bodens der Halterung (36) im rechten Winkel angeordnet sind.

5. Struktur für die Schallbehandlung nach einem der Ansprüche 1 bis 4, **dadurch gekennzeichnet, dass** die schalldämmende Unterstruktur (30) mehrere Schichten aufweist, wenigstens eine Mikroperforierungen aufweisende Dämmschicht und wenigstens eine Strukturschicht, die massive Zonen aufweist, die Öffnungen (46) begrenzen, die die Mikroperforierungen der Dämmschicht freilegen, und dass die Bänder (32) so an der schalldämmenden Unterstruktur (30) angebracht sind, dass die Zwischenräume zwischen den Bändern (32) mit einer massiven Zone zusammenfallen.

6. Struktur für die Schallbehandlung nach einem der Ansprüche 1 bis 5, **dadurch gekennzeichnet, dass** die schalldämmende Unterstruktur (30) Kanäle (48) aufweist, die für die Warmluft eines Enteisungssystems bestimmt sind.

7. Flugzeuggondel mit einem Lufteinlass, der im Bereich wenigstens eines Teils seiner Oberfläche eine Struktur für die Schallbehandlung nach einem der Ansprüche 1 bis 6 aufweist.
